# EUROPÄISCHE PATENTSCHRIFT

(11) **EP 0 675 028 B1**
(45) Veröffentlichungstag und Bekanntmachung des Hinweises auf die Patenterteilung: **14.05.1997**
(21) Anmeldenummer: 95100883.8
(22) Anmeldetag: 24.01.1995
(51) Int. Cl.: B60R 22/00

(54) **Sicherheitsgurtsystem für schwangere Frauen**
Vehicle seat belt for pregnant women
Ceinture de sécurité pour femmes enceintes

(30) Priorität: 31.03.1994 DE 4411247; 12.04.1994 DE 4412519
(43) Veröffentlichungstag der Anmeldung: 04.10.1995
(73) Patentinhaber: Wipper, Andreas, Dipl.-Ing. (FH), D-76189 Karlsruhe (DE)
(72) Erfinder: Wipper, Andreas, Dipl.-Ing. (FH), D-76189 Karlsruhe (DE)

(56) Entgegenhaltungen:
- WO-A-90/08676
- DE-A- 2 534 547
- DE-A- 2 906 568
- DE-A- 3 009 395
- DE-U- 9 309 726
- FR-A- 2 655 300
- US-A- 5 005 865

## Beschreibung

Die Erfindung betrifft ein Sicherheitsgurtsystem für schwangere Frauen in Fahrzeugen. Bei Fahrzeugunfällen, besonders bei Frontalzusammenstößen, sind schwangere Frauen mit oder ohne Anlegen des herkömmlichen Sicherheitsgurtes eines Fahrzeuges sehr gefährdet.
Die herkömmlichen Sicherheitsgurtsysteme stellen deshalb eine große Gefahrenquelle für Schwangere im Straßenverkehr dar, da der Standardsicherheitsgurt (Verlauf des Gurtes über den Bauch und das Becken) bei Unfällen in den meisten Fällen zu schwangerschaftsbezogene Verletzungen führt. Eine geringe Gurtverlaufänderung des Standardsicherheitsgurtes, wie z.B. Gurtverlauf über oder unter der Bauchzone, kann ebenfalls bei einem Unfall schwangerschaftsbezogene Verletzungen hervorrufen. Bei einem Verkehrsunfall werden mit fortschreitender Schwangerschaft sowohl äußere Verletzungsmöglichkeiten an der überdehnten Bauchdecke als auch innere Verletzungsmöglichkeiten am ungeborenen Kind beobachtet. Zusätzlich kann es bei einem schweren Bauchtrauma sehr viel leichter bei der Schwangeren als bei der Nichtschwangeren zu Verletzungen von Leber, Milz, Darm oder Zwerchfell kommen.
Hierbei ist eine für schwangere Frauen gedachte Gurtbefreiung in der heutigen Gefahrenquelle im Straßenverkehr keine Lösung.

Aus der US-PS 52 15 354 ist ein gattungsgemäßes Sicherheitsgurtsystem für Schwangere bekannt, welches an einer Sitzlehne oder einer Sitzschale angebracht ist. Hierbei weist das Sicherheitsgurtsystem einen oberen und einen unteren Gurt auf, die den Bauchbereich und die Brust der Schwangeren gurtfrei belassen, wobei beide Gurte statisch ausgeführt sind. Dabei ist eine Bewegungsfreiheit der Schwangeren im angegurteten Zustand stark eingeschränkt.
Eine derartige Gestaltung des Sicherheitsgurtsystems ist hinsichtlich der Herstellung und der Montage aufwendig, da von verschiedenen Sitzlehnenformen und -typen ausgegangen werden muß.

Aus der DE-OS 27 10 591 ist ein Sicherheitsgurtsystem bekannt, welches aus zwei Schultergurten besteht, das die Brust der anzuschnallenden Person freiläßt und mit einem hinter der Sitzlehne versehenen Gurtaufroller als dynamisch anzusehen ist. Der Beckengurtabschnitt ist dabei statisch ausgeführt. Hierbei wird der Bauchbereich einer schwangeren Fraubeeinflußt.
Bei einem Verkehrsunfall kann ein solcher Beckengurt schwangerschaftsbezogene Verletzungen hervorrufen.

Aufgabe der Erfindung ist es, durch den Gurtverlauf des Sicherheitsgurtsystems für schwangere Frauen schwere unfallbedingte Schädigungen des Frauenkörpers und des ungeborenen Kindes zu vermindern. Zusätzlich soll der Schwangeren im angegurteten Zustand eine Bewegungsfreiheit im oberen Körperbereich eingeräumt werden. Das Sicherheitsgurtsystem soll eine derartige Gestaltung besitzen, daß Herstellung, Montage und Handhabung einfach sind.

Die Lösung dieser Aufgabe ergibt sich aus den Merkmalen des Anspruchs 1. Das Sicherheitsgurtsystem weist einen Obergurt, welcher auf einer dafür vorgesehenen Sitzlehne oder auf einer Lehnenschale mit Kopfstütze basiert, und einen statischen Untergurt auf. Durch den Gurtverlauf bleiben die Brust und der Bauchbereich der schwangeren Frau gurtfrei. Eine Bewegungsfreiheit der Schwangeren im oberen Körperbereich ist deshalb gewährleistet, da der Obergurt dynamisch ausgeführt ist. Ein weiterer Vorteil des Sicherheitsgurtsystems ist seine Gestaltung mit schon in der Automobiltechnik bewährten Bauteilen, was eine kostengünstige Herstellung möglich macht.

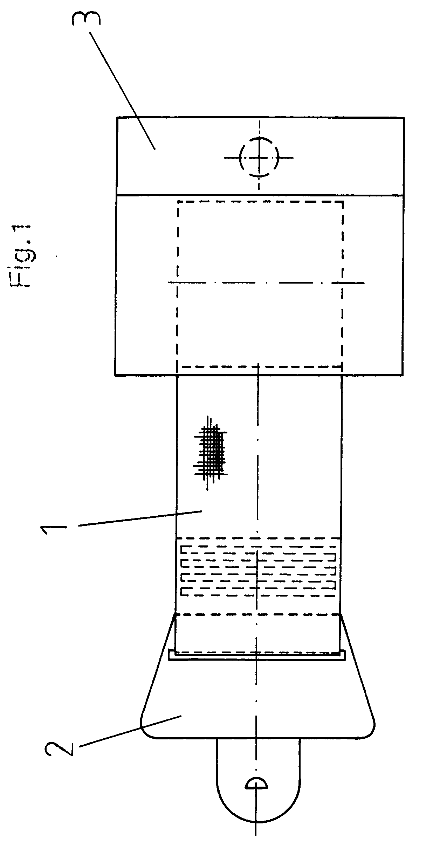

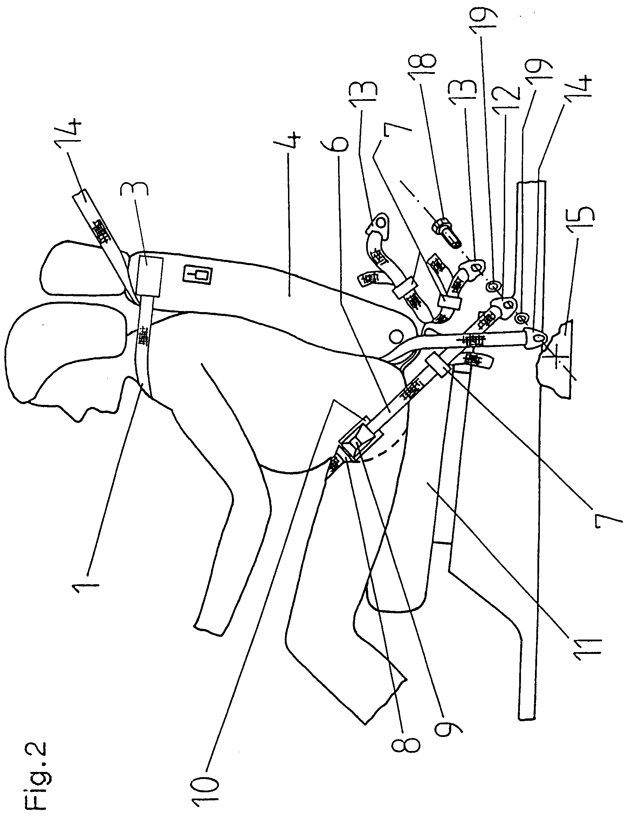

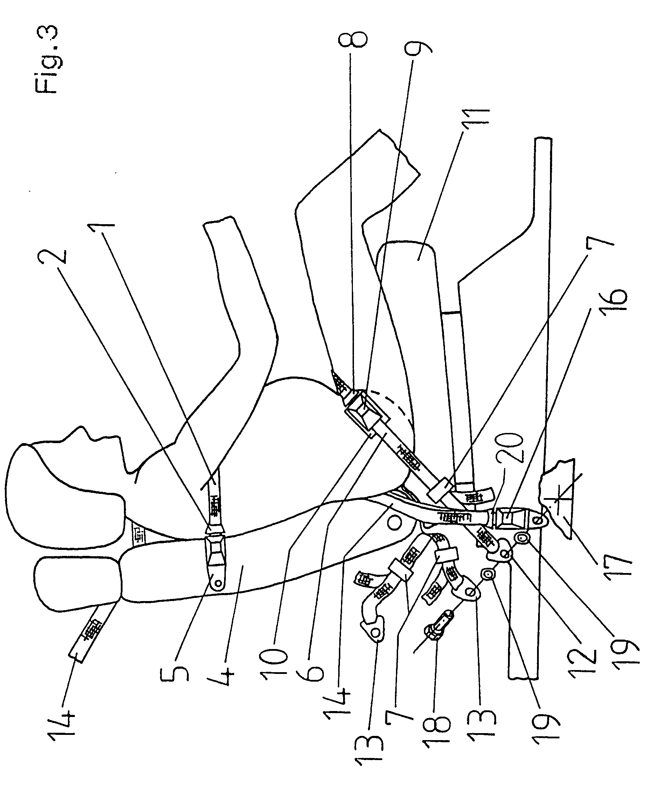

Der Aufbau ist bewußt so gestaltet, daß eine schnelle Montage und eine anwenderfreundliche Handhabung vorhanden sind. Am Fahrzeug selbst sind keine zusätzlichen Bohrungen oder Verschweißungen notwendig. Bei der Anwendung des Sicherheitsgurtsystems am Fahrzeugsitz werden lediglich für die Verschraubung des Standardsicherheitsgurtes und des Untergurtes an der Karosserie und am Sitz entsprechende Schrauben sowie Distanzscheiben benötigt.
Der Fahrzeugsitz ist auch bei Vorhandensein des Sicherheitsgurtsystems für schwangere Frauen mit dem Standardsicherheitsgurtsystem für Nichtschwangere verwendbar.
Die Lehnenschale benötigt nicht die Einbaufläche wie eine Sitzschale gemäß der US-PS 52 15 354, und kann sowohl auf der rechten als auch auf der linken Seite im Fond des Fahrzeuges eingesetzt werden.
Ausführungsbeispiele der Erfindung sind in den Zeichnungen dargestellt und werden im folgenden näher beschrieben. Es zeigt
Fig.1 den dynamischen Obergurt mit Gurtaufroller und Gurtzunge;
Fig.2 und 3 die Seitenansichten des Fahrzeugsitzes und der Schwangeren mit Sicherheitsgurtsystem;
Fig.4 den statischen Untergurt für den Fahrzeugsitz;
Fig.5 eine perspektivische Darstellung des Fahrzeugsitzes mit Sicherheitsgurtsystem;
Fig.6 den statischen Untergurt für die Lehnenschale;
Fig.7 eine perspektivische Darstellung der Lehnenschale mit Sicherheitsgurtsystem.
Der Obergurt (1) (Fig. 1-3;5;7) ist mit einer Gurtzunge (2) versehen, die lösbar in einem Gurtschloß gehalten ist. Der Gurtaufroller (3) sowie das Gurtschloß sind an der Sitzlehne (4) oder Lehnenschale (21) seitlich, oder hinten an der Sitzlehne oder Lehnenschale, befestigt. Die Befestigung der einzelnen Sicherheitsgurtsystemteile entspricht den Dimensionen aller bisherigen Sicherheitsgurtsystembefestigungen in der Automobiltechnik.
Der Gurtaufroller (3) ist im Schulterbereich der Schwangeren (Fig.2;5;7) an der Sitzlehne (4) oder Lehnenschale (21) befestigt (verschraubt). Der Obergurt (1) verläuft, in Fahrtrichtung gesehen, von einem Schulterbereich über die Schulter des einen Armes aus, oberhalb der Brust entlang in Richtung des anderen Armes, in Höhe unter der Achsel unter diesem Arm hindurch.
Das Gurtschloß (5) (Fig.3;5;7), welches beweglich ist, ist auf der Höhe unter der Achsel der Schwangeren an der Sitzlehne (4) oder Lehnenschale (21) befestigt (verschraubt).

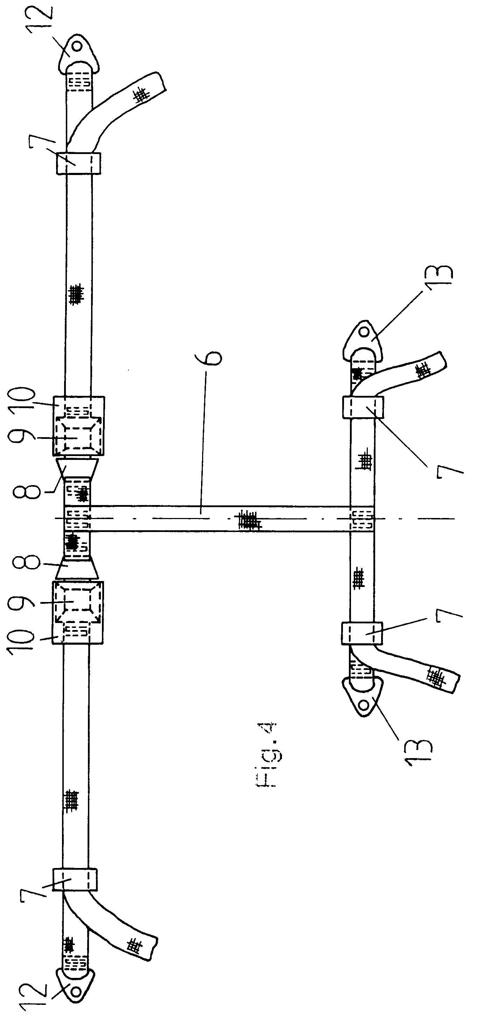

Der Untergurt (6) am Fahrzeugsitz (Fig.2-5) besitzt vier Befestigungsenden, vier Gurtlängenverstelleinrichtungen (7), zwei Gurtzungen (8) sowie zwei Gurtschlösser (9), die zum Körper der schwangeren Frau hin eine Polsterung (10) haben, und besteht aus einem vorderen, mittleren und hinteren Teil. Der mittlere Teil verläuft zwischen dem Sitzkissen (11) und der Sitzlehne (4) hindurch und liegt auf dem Sitzkissen (11), auf dem die Schwangere sitzt. Im vorderen Teil sind die Gurtschlösser (9) mit den Polsterungen (10) vorhanden. Diese verlaufen über den Leistenbereich der Schwangeren. Die zwei vorderen Untergurtenden (12) können die gleichen Befestigungspunkte aufweisen, wie die zwei hinteren Untergurtenden (13). Sie werden an den im Fahrzeug vorhandenen Standardsicherheitsgurtbefestigungspunkten an der Karosserie und am Sitz verschraubt. An der Türseite mit dem Standardsicherheitsgurt (14) an der Karosserie (15) und am Sitz, und im Mittelteil des Fahrzeuges mit dem Standardsicherheitsgurtschloß (16) an der Karosserie (17) und am Sitz.

Bei der Montage werden entsprechende Schrauben (18) und Distanzscheiben (19) eingesetzt. Sowohl im vorderen wie im hinteren Teil des Untergurtes (6) kann die Länge des Gurtes durch Gurtlängenverstelleinrichtungen (7) verändert werden.

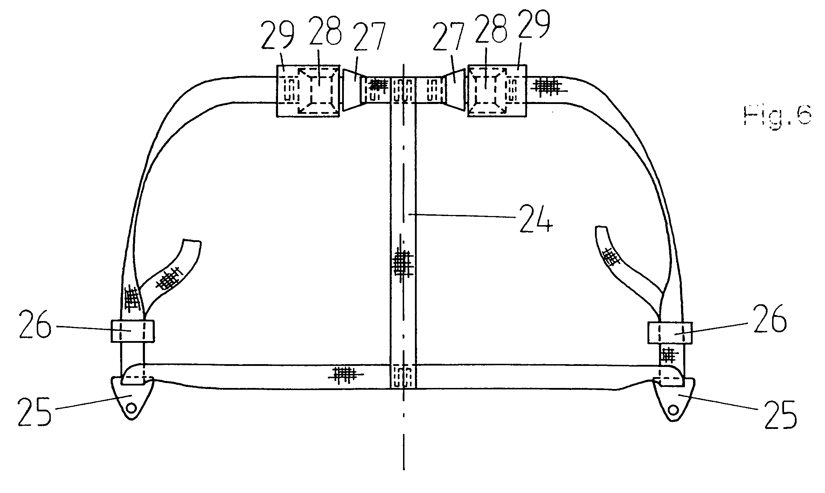

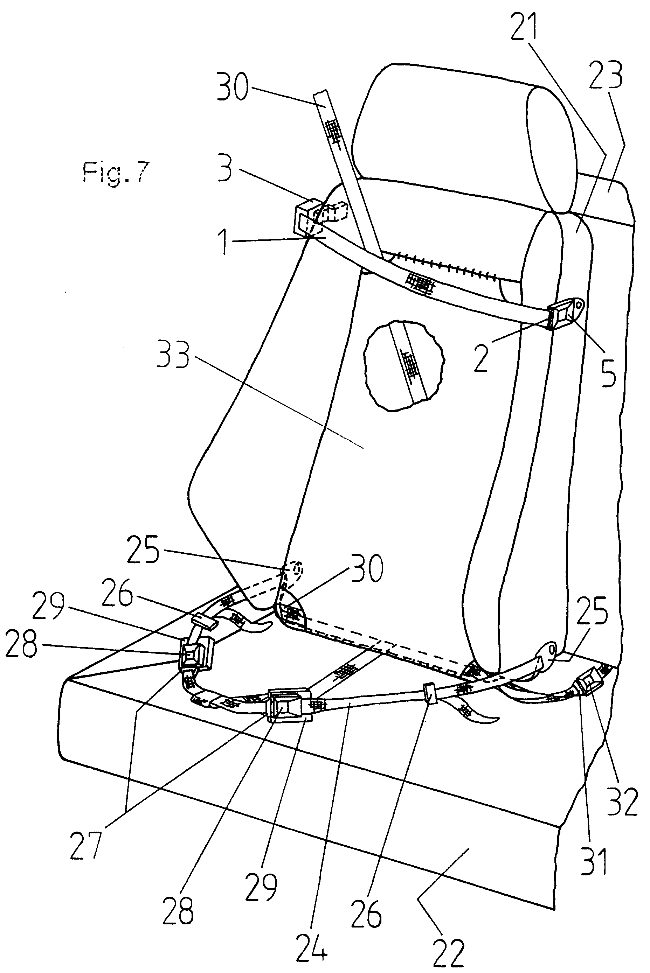

Der Untergurt (24) an der Lehnenschale (21) (Fig.6;7) besitzt zwei Befestigungsenden (25), drei Gurtlängenverstelleinrichtungen (26), zwei Gurtzungen (27) sowie zwei Gurtschlösser (28), die zum Körper der schwangeren Frau hin eine Polsterung (29) haben, und besteht aus einem vorderen, mittleren und hinteren Teil. Der mittlere Teil liegt auf der Sitzbank (22), auf der die Schwangere sitzt. Im vorderen Teil sind die Gurtschlösser (28) mit den Polsterungen (29) vorhanden. Diese verlaufen über den Leistenbereich der Schwangeren.
Die zwei Untergurtenden (25) werden an der Lehnenschale (21) im unteren Bereich befestigt (verschraubt). Im vorderen und mittleren Teil des Untergurtes (24) kann die Länge des Gurtes durch Gurtlängenverstelleinrichtungen (26) verändert werden.

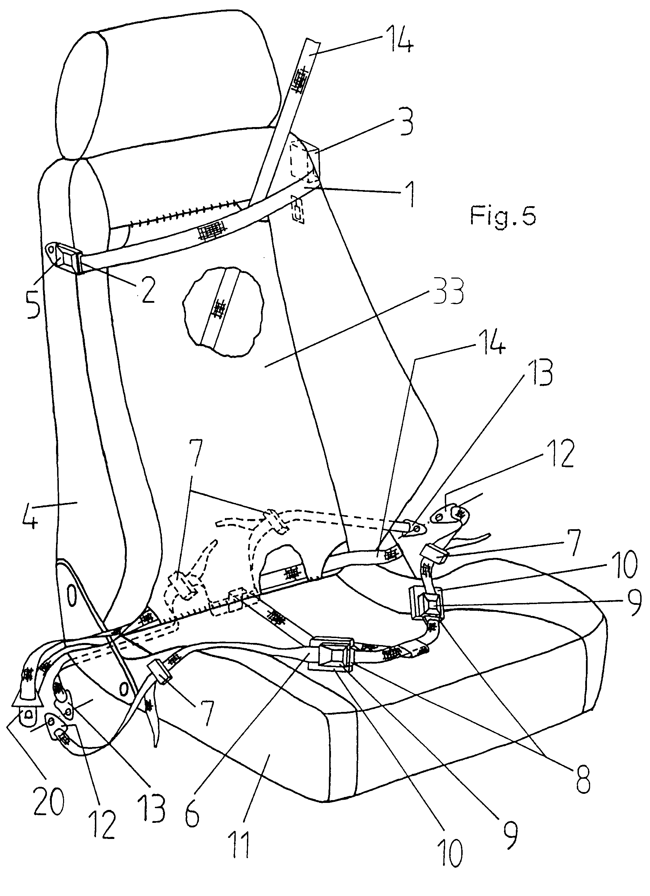

An der Sitzlehne (4) oder Lehnenschale (21) wird zusätzlich ein zweiter Bezug (33) (Fig.5;7) aufgenäht, unter dem der Standardsicherheitsgurt (14;30) des Fahrzeuges verläuft. Die Lehnenschale (21) wird im Fond auf die Sitzbank (22) gestellt und an die Sitzbanklehne (23) angelehnt. Hierbei ist der Standardsicherheitsgurt (14;30) bei Gebrauch des Sicherheitsgurtsystems für schwangere Frauen an der Sitzlehne (4) oder Lehnenschale (21) angelegt und die Standardsicherheitsgurtzunge (20;31) im Standardsicherheitsgurtschloß (16;32) (Fig.3;7) verschlossen.

## Patentansprüche

1. Sicherheitsgurtsystem für schwangere Frauen in Fahrzeugen, bestehend aus einem im Leistenbereich der Schwangeren angeordneten Untergurt mit auf der Vorderseite der Sitzlehne angeordneten Gurtschlössern und einem im Brustbereich angeordneten Obergurt, wobei durch den Gurtverlauf die Brust und der Bauchbereich gurtfrei bleiben,
dadurch gekennzeichnet, daß
der Obergurt (1) des Sicherheitsgurtsystems der vorderen Fahrzeugsitze oder einer Lehnenschale mit Kopfstütze (21), in Fahrtrichtung gesehen, von einem Schulterbereich über die Schulter des einen Armes aus, oberhalb der Brust entlang in Richtung des anderen Armes, in Höhe unter der Achsel unter diesem Arm hindurch verläuft, und daß die Gurtzunge (2) des Obergurtes (1) an einem an der Sitzlehne (4) oder der Lehnenschale (21) angebrachten beweglichen Gurtschloß (5) verankerbar ist, und daß die an dem Untergurt (6;24) angeordneten Gurtschlösser (9;28) zum Körper der schwangeren Frau hin Polsterungen (10;29) haben.

2. Sicherheitsgurtsystem nach Anspruch 1, dadurch
gekennzeichnet, daß
der Obergurt (1) dynamisch ausgebildet ist, wobei an seinem einen Ende ein Gurtaufroller (3) und an seinem anderen Ende eine Gurtzunge (2) angeordnet ist, die in einem Gurtschloß (5) festlegbar ist.

3. Sicherheitsgurtsystem nach Anspruch 2, dadurch
gekennzeichnet, daß
der Gurtaufroller (3) des Obergurtes (1) und das bewegliche Gurtschloß (5) seitlich oder hinten an der Sitzlehne (4) oder der Lehnenschale (21) befestigt sind.

4. Sicherheitsgurtsystem nach Anspruch 2, dadurch
gekennzeichnet, daß
der Gurtaufroller (3) und das Gurtschloß (5) seitlich mit der Sitzlehne (4) oder der Lehnenschale (21) verschraubt sind.

5. Sicherheitsgurtsystem nach Anspruch 1, dadurch
gekennzeichnet, daß
der Untergurt (6;24) statisch und längenverstellbar ausgebildet ist.

6. Sicherheitsgurtsystem nach Anspruch 5, dadurch
gekennzeichnet, daß
der Untergurt (6;24) aus einem vorderen, mittleren und hinteren Teil besteht, wobei der mittlere Teil des Untergurtes (6) am Fahrzeugsitz zwischen dem Sitzkissen (11) und der Sitzlehne (4) in der Mitte des Sitzes hindurch verläuft und auf dem Sitzkissen (11) aufliegt, und wobei der mittlere Teil des Untergurtes (24) an der Lehnenschale (21) in der Mitte der Lehnenschale auf der Sitzbank (22) aufliegt.

7. Sicherheitsgurtsystem nach Anspruch 6, dadurch
gekennzeichnet, daß
der Untergurt (6) am Fahrzeugsitz zwei vordere und zwei hintere Enden (12;13), vier Gurtlängenverstelleinrichtungen (7), zwei Gurtzungen (8) und zwei dazugehörige Gurtschlösser (9) aufweist, und daß der Untergurt (24) an der Lehnenschale (21) zwei Enden (25), drei Gurtlängenverstelleinrichtungen (26), zwei Gurtzungen (27) und zwei dazugehörige Gurtschlösser (28) aufweist.

8. Sicherheitsgurtsystem nach Anspruch 5, dadurch
gekennzeichnet, daß
die vorderen und hinteren Enden (12;13) des Untergurtes (6) am Fahrzeugsitz an den im Fahrzeug vorhandenen Befestigungspunkten des Standardsicherheitsgurtes (14) und am Sitz verschraubbar sind, und daß die zwei Enden (25) des Untergurtes (24) an der Lehnenschale (21) im unteren Bereich der Lehnenschale befestigt sind.

9. Sicherheitsgurtsystem nach Anspruch 8, dadurch
gekennzeichnet, daß
die zwei Enden (25) des Untergurtes (24) an der Lehnenschale (21) mit der Lehnenschale verschraubbar sind.

10. Sicherheitsgurtsystem nach Anspruch 1, dadurch
gekennzeichnet, daß
der Standardsicherheitsgurt (14;30) durch einen zweiten auf die Sitzlehne (4) oder Lehnenschale (21) aufgenähten Bezug (33) geführt wird, wobei die Lehnenschale (21), in Fahrtrichtung gesehen, sowohl auf der rechten als auch auf der linken Seite im Fond eines Fahrzeuges eingesetzt werden kann.

## Claims

1. Seat belt system for expectant mothers in vehicles, consisting of a lower belt arranged in the inguinal region of the pregnant woman with belt buckles arranged on the front side of the seat back and an upper belt arranged in the chest area, whereby the chest and the abdominal region remain belt-free as a result of the passage of the belt,
characterized in that
the upper belt (1) of the seat belt system of the anterior vehicle seats or of a seat-back shell with head restraint (21), viewed in the direction of travel, passes from one shoulder area over the shoulder of the one arm, above the chest along in the direction of the other arm, at the level below the armpit through below this arm, and that the latch plate (2) of the upper belt (1) can be anchored to a movable belt buckle (5) attached to the seat back (4) or the seat-back shell (21), and that the belt buckles (9;28) arranged at the lower belt (6;24) have cushionings (10;29) towards the body of the pregnant woman.

2. Seat belt system pursuant to Claim 1,
characterized in that
the upper belt (1) is dynamic in design, with a belt retractor (3) arranged at its one end and a latch plate (2), which can be held in a belt buckle (5), at its other end.

3. Seat belt system pursuant to Claim 2,
characterized in that
the belt retractor (3) of the upper belt (1) and the movable belt buckle (5) are fastened to the side or the back of the seat back (4) or of the seat-back shell (21).

4. Seat belt system pursuant to Claim 2,
characterized in that
the belt retractor (3) and the belt buckle (5) are bolted to the side of the seat back (4) or the seat-back shell (21).

5. Seat belt system pursuant to Claim 1,
characterized in that
the lower belt (6;24) is static in design and of adjustable length.

6. Seat belt system pursuant to Claim 5,
characterized in that
the lower belt (6;24) consists of an anterior, a middle and a posterior part, whereby the middle part of the lower belt (6) passes through at the vehicle seat between the seat cushion (11) and the seat back (4) in the middle of the seat and lies on the seat cushion (11), and whereby the middle part of the lower belt (24) lies on the seat-back shell (21) in the middle of the seat-back shell on the bench seat (22).

7. Seat belt system pursuant to Claim 6,
characterized in that
the lower belt (6) displays two anterior and two posterior ends (12;13), four belt length adjustment devices (7), two latch plates (8) and two corresponding belt buckles (9) at the vehicle seat, and that the lower belt (24) displays two ends (25), three belt length adjustment devices (26), two latch plates (27) and two corresponding belt buckles (28) at the seat-back shell (21).

8. Seat belt system pursuant to Claim 5,
characterized in that
the anterior and posterior ends (12;13) of the lower belt (6) at the vehicle seat can be bolted at the already existing fastening points of the standard seat belt (14) and to the seat, and that the two ends (25) of the lower belt (24) at the seat-back shell (21) are fastened in the lower area of the seat-back shell.

9. Seat belt system pursuant to Claim 8,
characterized in that
the two ends (25) of the lower belt (24) at the seat-back shell (21) can be bolted with the seat-back shell.

10. Seat belt system pursuant to Claim 1,
characterized in that
the standard seat belt (14;30) is led through a second seat cover (33) sewn to the seat back (4) or seat-back shell (21): the seat-back shell (21), viewed in the direction of travel, can be used both on the right-hand and on the left-hand side in the back of a vehicle.

## Revendications

1. Système de ceintures de sécurité pour femmes enceintes dans des véhicules, composé d'une ceinture inférieure placée sur la région inguinale de la femme enceinte et comportant des boucles placées à l'avant du dossier du siège, et d'une ceinture supérieure placée sur la région pectorale, de sorte que le parcours de la ceinture ne recouvre ni la poitrine ni la région abdominale,
caractérisé en ce que
la ceinture supérieure (1) du système de ceintures de sécurité des sièges avant du véhicule ou d'un dossier-coque équipé d'un appui-tête (21), part, en regardant dans le sens de la marche du véhicule, d'une région scapulaire, passe sur l'épaule du bras en question puis au-dessus de la poitrine en direction de l'autre bras pour arriver sous l'aisselle de ce bras et en ce que l'attache (2) de la ceinture supérieure (1) peut s'enclencher dans une boucle (5) mobile placée sur le dossier du siège (4) ou sur le dossier-coque (21), et en ce que les boucles (9, 28) montées sur la ceinture inférieure (6, 24) sont revêtues d'un capitonnage (10, 29) sur la face appuyant sur le corps de la femme enceinte.

2. Système de ceintures de sécurité selon revendication 1, caractérisé en ce que la ceinture supérieure (1) est conçue de manière dynamique, étant munie d'un enrouleur (3) à une extrémité et d'une attache (2) pouvant s'enclencher dans une boucle (5) à l'autre extrémité.

3. Système de ceintures de sécurité selon revendication 2, caractérisé en ce que l'enrouleur (3) de la ceinture supérieure (1) et la boucle mobile (5) se fixent sur le côté ou au dos du dossier (4) du siège ou du dossier-coque (21).

4. Système de ceintures de sécurité selon revendication 2, caractérisé en ce que l'enrouleur (3) et la boucle (5) se vissent sur le côté du dossier (4) du siège ou du dossier-coque (21).

5. Système de ceintures de sécurité selon revendication 1, caractérisé en ce que la ceinture inférieure (6, 24) est conçue de manière statique et est réglable en longueur.

6. Système de ceintures de sécurité selon revendication 5, caractérisé en ce que la ceinture inférieure (6, 24) comporte une partie avant, une partie médiane et une partie arrière, la partie médiane de la ceinture inférieure (6) étant montée sur le siège du véhicule entre le coussin (11) du siège et le dossier (4) du siège, au milieu du siège, et repose sur le coussin (11) du siège, la partie médiane de la ceinture inférieure (24) montée sur le dossier-coque (21) reposant sur la banquette (22) au milieu du dossier-coque.

7. Système de ceintures de sécurité selon revendication 6, caractérisé en ce que la ceinture inférieure (6) montée sur le siège du véhicule comporte deux extrémités avant et deux extrémités arrière (12, 13), quatre dispositifs de réglage de la longueur de la ceinture (7), deux attaches (8) et deux boucles correspondantes (9) et en ce que la ceinture inférieure (24) montée sur le dossier-coque (21) comporte deux extrémités (25), trois dispositifs de réglage de la longueur de la ceinture (26), deux attaches (27) et deux boucles correspondantes (28).

8. Système de ceintures de sécurité selon revendication 5, caractérisé en ce que les extrémités avant et arrière (12, 13) de la ceinture inférieure (6) montée sur le siège du véhicule peuvent se visser aux points de fixation existants de la ceinture de sécurité standard (14) et au siège et en ce que les deux extrémités (25) de la ceinture inférieure (24) se fixent à la partie inférieure du dossier-coque (21).

9. Système de ceintures de sécurité selon revendication 8, caractérisé en ce que les deux extrémités (25) de la ceinture inférieure (24) du dossier-coque (21) sont vissables au dossier-coque.

10. Système de ceintures de sécurité selon revendication 1, caractérisé en ce que la ceinture de sécurité standard (14, 30) traverse une deuxième garniture (33) cousue sur le dossier du siège (4) ou sur le dossier-coque (21), le dossier-coque (21), vu dans le sens de la marche, pouvant se mettre en place aussi bien sur le côté droit que sur le côté gauche du siège arrière d'un véhicule.
